# EUROPEAN PATENT APPLICATION

(11) **EP 4 089 820 A1**
(43) Date of publication of application: **16.11.2022**
(21) Application number: 21185963.2
(22) Date of filing: 16.07.2021
(51) Int. Cl.: H01M 50/244, H01M 50/249, H01M 50/209, H01M 50/242, H01M 50/262, H01M 50/593, H01M 50/474, H01M 50/477, H01M 50/289, H01M 50/291

(54) **BATTERY CONTAINER, BATTERY PACK AND BATTERY ASSEMBLING METHOD**

(30) Priority: 14.05.2021 CN 202110529083
(71) Applicant: CALB Co., Ltd., Changzhou City, Jiangsu Province (CN)
(72) Inventor: Pan, Fangfang, Changzhou City (CN); Kong, Fanming, Changzhou City (CN); Yin, Xucheng, Changzhou City (CN); Tian, Ruisheng, Changzhou City (CN); Song, Tianrong, Changzhou City (CN); Han, Xiaoming, Changzhou City (CN)
(74) Representative: Becker, Eberhard

(57) **Abstract**

The disclosure relates to the technical field of batteries, and particularly relates to a battery container (100), a battery pack, and a battery assembling method. The battery container (100) includes a bottom plate (110), a first fixing member (120) disposed on the bottom plate (110), and a second fixing member (130) disposed on the bottom plate (110). The second fixing member (130) and the first fixing member (120) are arranged opposite to each other. A battery accommodating part (111) is formed between the first fixing member (120) and the second fixing member (130). A surface of the first fixing member (120) facing the second fixing member (130) has a first groove (121), and a surface of the second fixing member (130) facing the first fixing member (120) has a second groove (131). The first groove (121) and the second groove (131) are configured to remove a clamp from the battery container (100) during assembly.

## Description

### BACKGROUND

### Technical Field

The disclosure relates to the technical field of batteries, and particularly relates to a battery container, a battery pack, and a battery assembling method.

### Description of Related Art

With the development and progress of technology, the application of electric vehicles is becoming more and more extensive. At present, due to the limitations of battery energy density and other reasons, electric vehicles still face the problem of shorter battery life. Therefore, it is required to make the battery accommodating space in the electric vehicle as large as possible, but due to the limitation of the vehicle structure, the battery accommodating space is limited. Consequently, it is needed to place as many batteries as possible in the limited space of the battery container. When batteries are installed in the accommodating space, it is necessary to apply a proper pre-tightening force to the batteries, which is beneficial to the reaction of the batteries during charging and discharging. However, it also makes the installation more difficult when multiple batteries are to be installed in the battery container.

It should be noted that the information disclosed in the background art section above is only used to enhance the understanding of the background of the disclosure, and therefore may include information that does not constitute the related art known to those of ordinary skill in the art.

### SUMMARY

The disclosure provides a battery container, a battery pack, and a battery assembling method.

According to the first aspect of the disclosure, a battery container is provided, including a bottom plate, a first fixing member disposed on the bottom plate, and a second fixing member disposed on the bottom plate. The second fixing member and the first fixing member are arranged opposite to each other, an accommodating part for accommodating batteries is formed between the first fixing member and the second fixing member. A surface of the first fixing member facing the second fixing member has a first groove, the first groove extends to an outer edge of the surface of the first fixing member facing the second fixing member, a surface of the second fixing member facing the first fixing member has a second groove, and the second groove extends to an outer edge of the surface of the second fixing member facing the first fixing member.

According to the second aspect of the disclosure, a battery pack is provided. The battery pack includes the above-mentioned battery container, and a battery apparatus including a plurality of batteries. The battery apparatus is disposed in an accommodating part of the battery container.

According to the third aspect of the disclosure, a battery assembling method is provided for the above-mentioned battery pack. The battery assembling method includes the following steps. Clamping a plurality of batteries in a battery apparatus with a clamp, and then placing the plurality of batteries in the accommodating part of a battery container, and controlling the clamp to loosen the battery apparatus, and removing the clamp along the first groove and the second groove.

### BRIEF DESCRIPTION OF THE DRAWINGS

For a better understanding of the disclosure, reference may be made to exemplary embodiments shown in the following drawings. The components in the drawings are not necessarily to scale and related elements may be omitted, or in some instances proportions may have been exaggerated, so as to emphasize and clearly illustrate the features described herein. In addition, related elements or components can be variously arranged, as known in the art. Further, in the drawings, like reference numerals designate same or like parts throughout the several views.
FIG. 1 is a schematic diagram of a first battery container provided by an exemplary embodiment of the disclosure.
FIG. 2 is a schematic diagram of a second battery container provided by an exemplary embodiment of the disclosure.
FIG. 3 is a schematic diagram of a third battery container provided by an exemplary embodiment of the disclosure.
FIG. 4 is a schematic diagram of a fourth battery container provided by an exemplary embodiment of the disclosure.
FIG. 5 is a schematic diagram of a fifth battery container provided by an exemplary embodiment of the disclosure.
FIG. 6 is a schematic diagram of a sixth battery container provided by an exemplary embodiment of the disclosure.
FIG. 7 is a schematic diagram of a first battery pack provided by an exemplary embodiment of the disclosure.
FIG. 8 is a schematic diagram of a second battery pack provided by an exemplary embodiment of the disclosure.
FIG. 9 is a schematic diagram of a battery apparatus provided by an exemplary embodiment of the disclosure.
FIG. 10 is a schematic diagram of a third battery pack provided by an exemplary embodiment of the disclosure.
FIG. 11 is a flowchart of a first battery assembling method provided by an exemplary embodiment of the disclosure.
FIG. 12 is a flowchart of a second battery assembling method provided by an exemplary embodiment of the disclosure.
FIG. 13 is a flowchart of a third battery assembling method provided by an exemplary embodiment of the disclosure.

### DETAILED DESCRIPTION OF DISCLOSED EMBODIMENTS

The technical solutions in the exemplary embodiments of the disclosure will be described clearly and explicitly in conjunction with the drawings in the exemplary embodiments of the disclosure. The description proposed herein is just the exemplary embodiments for the purpose of illustrations only, not intended to limit the scope of the disclosure, so it should be understood that and various modifications and variations could be made thereto without departing from the scope of the disclosure.

In the description of the present disclosure, unless otherwise specifically defined and limited, the terms "first", "second" and the like are only used for illustrative purposes and are not to be construed as expressing or implying a relative importance. The term "plurality" is two or more. The term "and/or" includes any and all combinations of one or more of the associated listed items.

In particular, a reference to "the" object or "a" and "an" object is intended to denote also one of a possible plurality of such objects. Unless otherwise defined or described, the terms "connect", "fix" should be broadly interpreted, for example, the term "connect" can be "fixedly connect", "detachably connect", "integrally connect", "electrically connect" or "signal connect". The term "connect" also can be "directly connect" or "indirectly connect via a medium". For the persons skilled in the art, the specific meanings of the abovementioned terms in the present disclosure can be understood according to the specific situation.

Further, in the description of the present disclosure, it should be understood that spatially relative terms, such as "above", "below" "inside", "outside" and the like, are described based on orientations illustrated in the figures, but are not intended to limit the exemplary embodiments of the present disclosure.

In the context, it should also be understood that when an element or features is provided "outside" or "inside" of another element(s), it can be directly provided "outside" or "inside" of the other element, or be indirectly provided "outside" or "inside" of the another element(s) by an intermediate element.

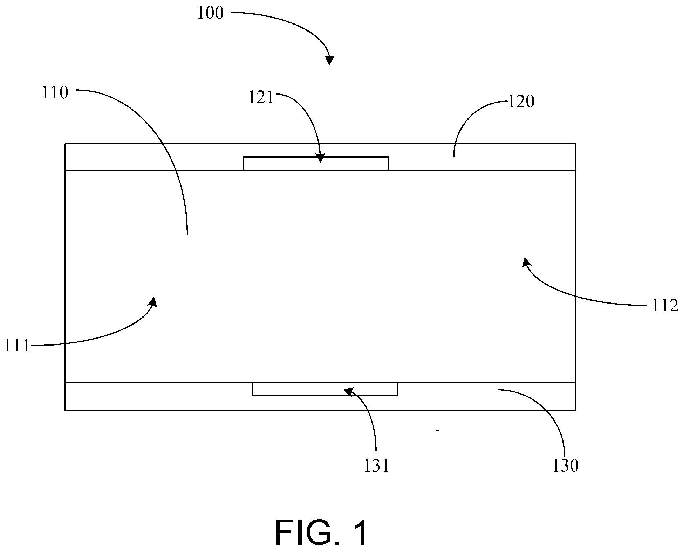

An exemplary embodiment of the disclosure first provides a battery container 100. As shown in FIG. 1, the battery container 100 includes a bottom plate 110, a first fixing member 120, and a second fixing member 130. The first fixing member 120 is disposed on the bottom plate 110. The second fixing member 130 is disposed on the bottom plate 110, and the second fixing member 130 and the first fixing member 120 are arranged opposite to each other. An accommodating part 111 for accommodating batteries is formed between the first fixing member 120 and the second fixing member 130. A surface of the first fixing member 120 facing the second fixing member 130 has a first groove 121, and the first groove 121 extends to an outer edge of the surface of the first fixing member 120 facing the second fixing member 130. A surface of the second fixing member 130 facing the first fixing member 120 has a second groove 131, and the second groove 131 extends to an outer edge of the surface of the second fixing member 130 facing the first fixing member 120. The first groove 121 and the second groove 131 are used for a clamp to enter and exit the battery container 100 during assembly.

In the battery container 100 provided by the embodiment of the disclosure, through the first groove 121 of the first fixing member 120 and the second groove 131 disposed on the second fixing member 130, the clamp is allowed to enter and exit the battery container from the first groove 121 and the second groove 131 when batteries are installed. In this way, it is possible to install a plurality of batteries using the clamp, and prevent interference between the first fixing member 120 and the second fixing member 130 and the clamp, which reduces the difficulty of battery installation, and improves the convenience and efficiency of battery installation.

Hereinafter, each part of the battery container 100 provided by the embodiment of the disclosure will be described in detail.

The bottom plate 110 may be a flat plate structure or similar to a flat plate structure. For example, the bottom plate 110 may be a stainless steel plate or an aluminum alloy plate, and so on. An accommodating region 112 is provided on the bottom plate 110, and the accommodating region 112 is configured to place batteries or a battery apparatus. The orthographic projection of the batteries or battery apparatus on the bottom plate 110 is located in the accommodating region 112. The batteries or battery apparatus can be directly placed in the accommodating region 112, or other devices, such as a cooling device, may be disposed between the batteries or battery apparatus and the bottom plate 110, but the embodiment of the disclosure is not limited thereto. The bottom plate 110 has a top surface, and the top surface of the bottom plate 110 may be a surface of the bottom plate 110 on which the first fixing member 120 and the second fixing member 130 are disposed.

The outer edge of the surface of the first fixing member 120 facing the second fixing member 130 refers to the edges of the surface of the first fixing member 120 facing the second fixing member 130 excluding the lower edge, and the lower edge of the surface of the first fixing member 120 facing the second fixing member 130 refers to the edge of the first fixing member 120 close to the bottom plate 110. The outer edge of the surface of the second fixing member 130 facing the first fixing member 120 refers to the edges of the surface of the second fixing member 130 facing the first fixing member 120 excluding the lower edge, the lower edge of the surface of the second fixing member 130 facing the first fixing member 120 refers to the edge of the second fixing member 130 close to the bottom plate 110.

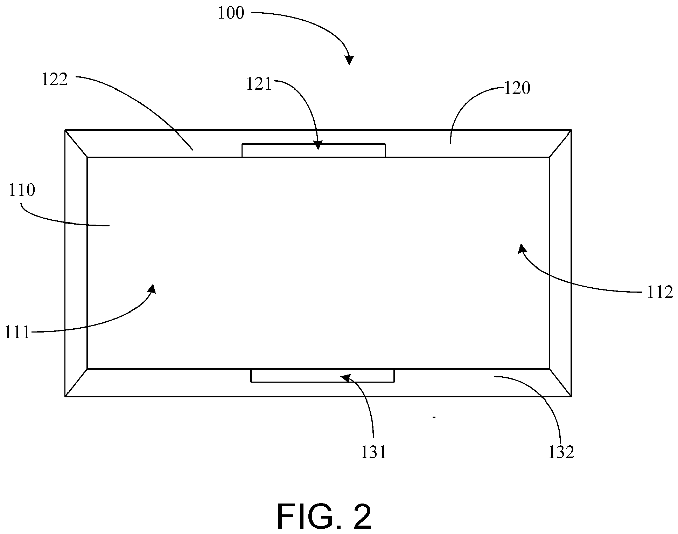

The side surface of the first fixing member 120 facing the second fixing member 130 and the side surface of the second fixing member 130 facing the first fixing member 120 are parallel. For example, as shown in FIG. 2, the first fixing member 120 may include a first end plate 122. The first end plate 122 is disposed on the top surface of the bottom plate 110 and is perpendicular to the top surface of the bottom plate 110. The second fixing member 130 may include a second end plate 132. The second end plate 132 is disposed on the top surface of the bottom plate 110, and the second end plate 132 and the first end plate 122 are arranged in parallel.

It should be noted that, in the embodiment of the disclosure, the first end plate 122 and the second end plate 132 being arranged in parallel means that the first end plate 122 and the second end plate 132 are arranged in parallel within an allowable range of processing errors. That is, when the acute angle between the first end plate 122 and the second end plate 132 is smaller than a preset angle value, it can be considered that the first end plate 122 and the second end plate 132 are parallel. For example, the preset angle value may be 1 degree, 2 degrees, 3 degrees or 5 degrees. The first end plate 122 being perpendicular to the top surface of the bottom plate 110 means that the inner side surface of the first end plate 122 is perpendicular to the top surface of the bottom plate 110, and the second end plate 132 being perpendicular to the top surface of the bottom plate 110 means that the inner side surface of the second end plate 132 is perpendicular to the top surface of the bottom plate 110. The inner side surface of the first end plate 122 refers to a surface of the first end plate 122 facing the second end plate 132, and the inner side surface of the second end plate 132 refers to a surface of the second end plate 132 facing the first end plate 122.

The accommodating part 111 is formed between the first end plate 122 and the second end plate 132, and the accommodating part 111 is used for placing the batteries. When the batteries are placed in the accommodating part 111, a larger surface of the battery is parallel to the first end plate 122 and the second end plate 132. The larger surface of the battery refers to the surface with the largest area in the battery. For example, when the battery has a cuboid structure, the larger surface of the battery refers to two surfaces with the largest area in the cuboid.

In a feasible embodiment of the disclosure, as shown in FIG. 2, the bottom plate 110 has the accommodating region 112 on the top surface, and the accommodating region 112 may be a rectangular structure. The first end plate 122 may be disposed on one side of the rectangular accommodating region 112, and the second end plate 132 is disposed on one side of the rectangular accommodating region 112 opposite to the first fixing member 120. For example, the bottom plate 110 is connected with a frame, and the frame surrounds the accommodating region 112. The frame has a first frame and a second frame arranged opposite to each other. The first frame forms the first end plate 122 and the second frame forms the second end plate 132. The first groove 121 is provided on the inner side surface of the first frame, and the second groove 131 is provided on the inner side surface of the second frame.

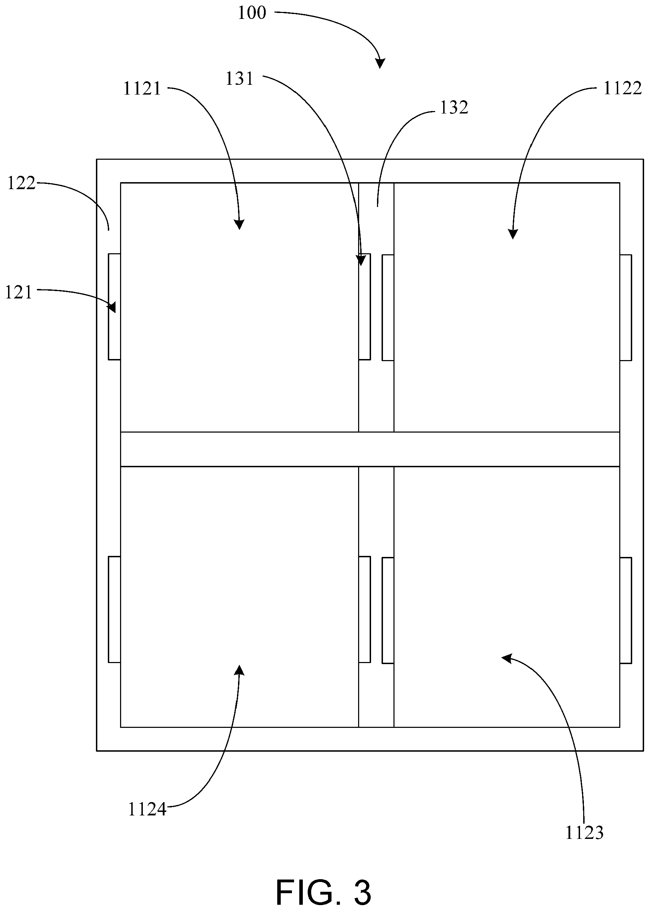

In another feasible embodiment of the disclosure, as shown in FIG. 3, the accommodating region 112 on the bottom plate 110 may be divided into a plurality of sub-accommodating regions, and each sub-accommodating region is a rectangular structure. For example, a frame may be connected to the bottom plate 110, and the frame surrounds the accommodating region 112. The frame is provided with beams, and the accommodating region 112 is divided into the plurality of sub-accommodating regions by one or more beams in the frame. The first end plate 122 is disposed on one side of one sub-accommodating region, and the second end plate 132 is disposed on one side of the sub-accommodating region opposite to the first end plate 122.

A first beam (crossbeam) and a second beam (longitudinal beam) may be disposed in the frame. The first beam and the second beam are arranged perpendicular to each other. The first beam and the second beam divide the accommodating region 112 into four sub-accommodating regions. For one sub-accommodating region, the first end plate 122 is a part (half) of one side of the frame, and the second end plate 132 is a part (half) of the beam opposite to the first fixing member 120.

For example, the first beam and one side (first frame) of the frame opposite to the first beam form the accommodating part 111. That is, the first end plate 122 is the first beam, and the second end plate 132 is the first frame of the frame. At this time, the first groove 121 may be disposed on the side surface of the first beam facing the first frame, and the second groove 131 may be disposed on the side surface of the first frame facing the first beam.

The frame includes the first frame, the second frame, a third frame, and a fourth frame that are connected head to end. When the accommodating region 112 is divided into a plurality of sub-accommodating regions by the first beam and the second beam, the first groove 121 and the second groove 131 may be respectively disposed on the end plates on two sides of each accommodating region 112. For example, the accommodating region 112 is provided with one first beam and one second beam. The first beam and the second beam are arranged perpendicular to each other to divide the accommodating region 112 into a first sub-accommodating region 1121, a second sub-accommodating region 1122, a third sub-accommodating region 1123, and a fourth sub-accommodating region 1124. In the accommodating part 111 corresponding to the first sub-accommodating region 1121, the first frame forms the first end plate 122, and the first beam forms the second end plate 132. In the accommodating part 111 corresponding to the second sub-accommodating region 1122, the first frame forms the first end plate 122, and the first beam forms the second end plate 132. In the accommodating part 111 corresponding to the third sub-accommodating region 1123, the third frame forms the first end plate 122, and the first beam forms the second end plate 132. In the accommodating part 111 corresponding to the fourth sub-accommodating region 1124, the third frame forms the first end plate 122, and the first beam forms the second end plate 132. Of course, in practical applications, the number of beams in the frame may be changed, and the embodiment of the disclosure is not limited thereto.

The first groove 121 is disposed on the surface of the first end plate 122 facing the second end plate 132, the second groove 131 is disposed on the surface of the second end plate 132 facing the first end plate 122, and the extending direction of the first groove 121 is parallel to the extending direction of the second groove 131.

When the clamp places the battery apparatus between the first end plate 122 and the second end plate 132, a plurality of claws of the clamp enter and exit the battery container 100 in the same path. Therefore, the extending directions of the first groove 121 and the second groove 131 need to be parallel. Further, since the claws of the clamp holding two sides of the battery apparatus need to apply a symmetrical clamping force to the battery apparatus, the claws of the clamp holding two sides of the battery apparatus are arranged symmetrically. In order to adapt to this feature, the orthographic projection of the first groove 121 on the second end plate 132 coincides with the second groove 131.

One or more first grooves 121 may be disposed on the first end plate 122, and one or more second grooves 131 may be disposed on the second end plate 132. The number of the first grooves 121 on the first end plate 122 is the same as the number of the second grooves 131 on the second end plate 132. Of course, in practical applications, the number of the first grooves 121 on the first end plate 122 and the number of the second grooves 131 on the second end plate 132 may be determined according to the number of the claws of the clamp.

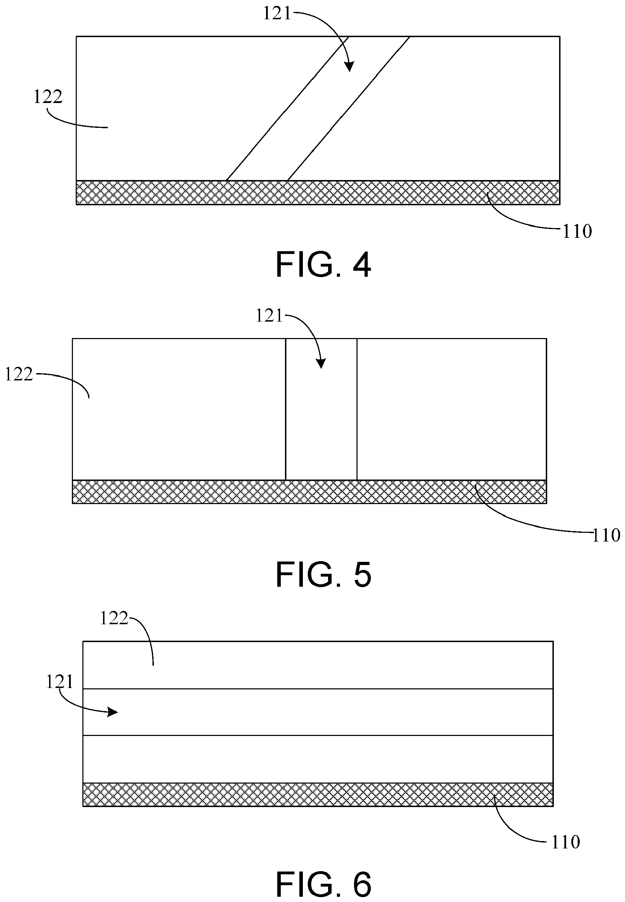

As shown in FIG. 4, the angle between the extending direction of the first groove 121 and the top surface of the bottom plate 110 is a preset angle, and the preset angle is greater than or equal to 0 degree and smaller than or equal to 90 degrees. The second groove 131 and the first groove 121 are arranged in parallel to each other. That is, the angle between the extending direction of the second groove 131 and the top surface of the bottom plate 110 is a preset angle, and the preset angle is greater than or equal to 0 degree and smaller than or equal to 90 degrees. In practical applications, the angle between the first groove 121 and the bottom plate 110 may be determined according to the angle at which the clamp enters and exits the battery container 100.

In a feasible embodiment of the disclosure, as shown in FIG. 5, the extending direction of the first groove 121 is perpendicular to the top surface of the bottom plate 110, and the extending direction of the second groove 131 is perpendicular to the top surface of the bottom plate 110. At this time, the clamp moves in the vertical direction during the battery installation process. The clamp moves from top to bottom when the battery apparatus is placed, and the clamp moves from bottom to top when the battery apparatus is released and exits the battery container 100.

The first groove 121 penetrates the top surface of the first end plate 122, and the second groove 131 penetrates the top surface of the second end plate 132. That is, the first groove 121 extends from the top surface of the first end plate 122 to the inside of the first end plate 122, the first groove 121 may extend from the top surface of the first end plate 122 to the bottom surface of the first end plate 122, or the first groove 121 may not penetrate the bottom surface of the first end plate 122. The second groove 131 extends from the top surface of the second end plate 132 to the inside of the second end plate 132, the second groove 131 may extend from the top surface of the second end plate 132 to the bottom surface of the second end plate 132, or the second groove 131 may not penetrate the bottom surface of the first end plate 122. The depths of the first groove 121 and the second groove 131 may be set according to the size of the claws of the clamp.

The clamp enters the battery container 100 from the top of the first end plate 122 and the second end plate 132. By making the first groove 121 penetrate the top surface of the first end plate 122 and making the second groove 131 penetrate the top surface of the second end plate 132, a passage for the clamp to enter and exit is formed, which is convenient for the installation of the battery apparatus.

It should be noted that, in the embodiment of the disclosure, the first groove 121 and the second groove 131 being arranged perpendicular to the top surface of the bottom plate means that the perpendicular arrangement of the first groove 121 and the second groove 131 and the top surface of the bottom plate is within an allowable range of processing errors. That is, when the acute angle between the first groove 121 and the top surface of the bottom plate and the acute angle between the second groove 131 and the top surface of the bottom plate is greater than a preset angle value, it can be considered that the first groove 121 and the second groove 131 are perpendicular to the top surface of the bottom plate. For example, the preset angle value may be 89 degrees, 88 degrees, 87 degrees or 86 degrees.

In another feasible embodiment of the disclosure, as shown in FIG. 6, the extending direction of the first groove 121 is parallel to the top surface of the bottom plate 110, and the extending direction of the second groove 131 is parallel to the top surface of the bottom plate 110. At this time, the clamp moves in the horizontal direction during the battery installation process. When the battery apparatus is placed, the clamp moves away from the battery container 100 toward the battery container 100, and when the battery apparatus is released and exits the battery container 100, the clamp moves from the battery container 100 in a direction away from the battery container 100.

The first groove 121 penetrates the first end surface of the first end plate 122, the second groove 131 penetrates the first end surface of the second end plate 132, and the first end surface of the first end plate 122 and the end surface of the second end plate 132 are located on the same side. That is, the first groove 121 extends from the first end surface of the first end plate 122 to the inside of the first end plate 122, and the first groove 121 may extend from the first end surface of the first end plate 122 to the second end surface of the first end plate 122, or the first groove 121 may not penetrate the second end surface of the first end plate 122. The second groove 131 extends from the first end surface of the second end plate 132 to the inside of the second end plate 132, and the second groove 131 may extend from the top surface of the second end plate 132 to the second end surface of the second end plate 132, or the second groove 131 may not penetrate the second end surface of the first end plate 122. The depths of the first groove 121 and the second groove 131 may be set according to the size of the claws of the clamp.

The clamp enters the battery container 100 from the first end of the first end plate 122 and the second end plate 132. By making the first groove 121 penetrate the first end surface of the first end plate 122 and making the second groove 131 penetrate the first end surface of the second end plate 132, a passage for the clamp to enter and exit is formed, which facilitates the installation of the battery apparatus.

It should be noted that, in the embodiment of the disclosure, the first groove 121 and the second groove 131 being arranged in parallel to the top surface of the bottom plate means that the parallel arrangement of the first groove 121 and the second groove 131 and the top surface of the bottom plate is within an allowable range of processing errors. That is, when the acute angle between the first groove 121 and the second groove 131 and the top surface of the bottom plate is smaller than a preset angle value, it can be considered that the first groove 121 and the second groove 131 are parallel to the top surface of the bottom plate. For example, the preset angle value may be 1 degree, 2 degrees, 3 degrees or 4 degrees.

It should be noted that the first end surface of the first fixing member 120 may be the outer end surface of the first fixing member 120. When two sides of the first fixing member 120 are both exposed to the outside, the first end surface of the first fixing member 120 may be any end of the first fixing member 120. When two sides of the second fixing member 130 are both exposed to the outside, the first end surface of the second fixing member 130 may be any end of the second fixing member 130.

In the battery container 100 provided by the embodiment of the disclosure, through the first groove 121 of the first fixing member 120 and the second groove 131 disposed on the second fixing member 130, the clamp is allowed to exit from the first groove 121 and the second groove 131 when batteries are installed. Thus, it is possible to install a plurality of batteries using the clamp, and prevent interference between the first fixing member 120 and the second fixing member 130 and the clamp, which reduces the difficulty of battery installation, and improves the convenience and efficiency of battery installation.

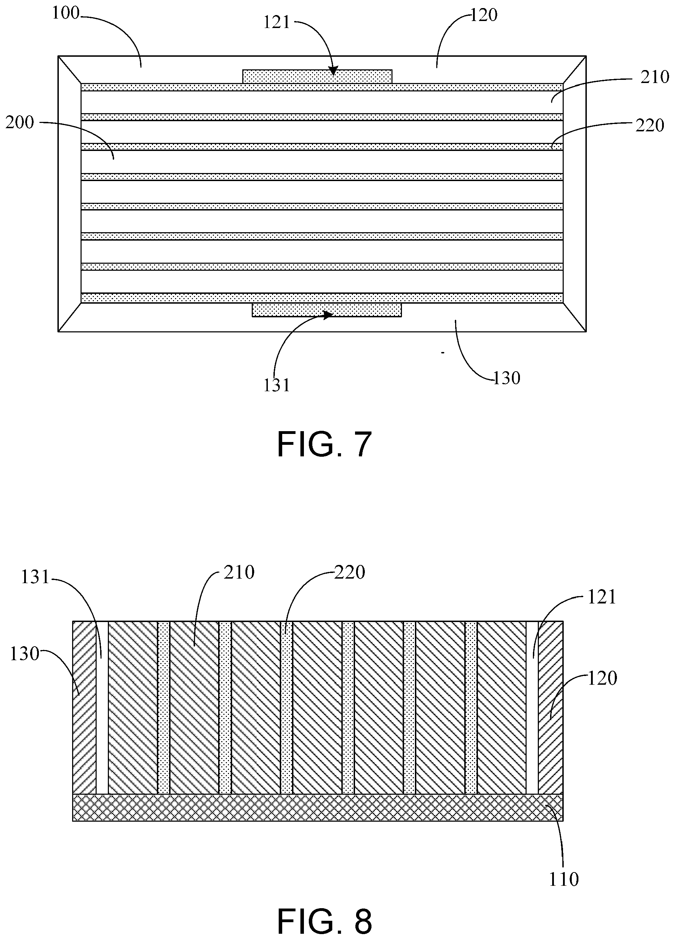

An exemplary embodiment of the disclosure also provides a battery pack. As shown in FIG. 7 and FIG. 8, the battery pack includes the above-mentioned battery container 100 and a battery apparatus 200. The battery apparatus 200 includes a plurality of batteries 210, and the battery apparatus 200 is disposed in the accommodating part 111 of the battery container 100.

The battery container 100 may include the bottom plate 110, the first fixing member 120, and the second fixing member 130. The first fixing member 120 is disposed on the bottom plate 110 and the second fixing member 130 is disposed on the bottom plate 110, and the second fixing member 130 and the first fixing member 120 are arranged opposite to each other. The accommodating part 111 for accommodating the batteries is formed between the first fixing member 120 and the second fixing member 130. A surface of the first fixing member 120 facing the second fixing member 130 is provided with the first groove 121, and the first groove 121 extends to the outer edge of the surface of the first fixing member 120 facing the second fixing member 130. A surface of the second fixing member 130 facing the first fixing member 120 is provided with the second groove 131, and the second groove 131 extends to the outer edge of the surface of the second fixing member 130 facing the first fixing member 120.

The first groove 121 on the first fixing member 120 and the second groove 131 on the second fixing member 130 may be used as a passage for the clamp to exit when the battery apparatus 200 is assembled. When the battery apparatus 200 is installed, the clamp first applies a pre-tightening force to the battery apparatus 200, and at this time, the battery apparatus 200 is in a compressed state. After the clamp places the battery apparatus 200 into the battery container 100, the clamp releases the battery apparatus 200. At this time, the battery apparatus 200 presses the clamp and accommodates the clamp with the first groove 121 and the second groove 131 to prevent the clamp from being held by the battery apparatus 200 and the first fixing member 120 and the second fixing member 130. That is, in the battery apparatus 200 provided by the embodiment of the disclosure, through the first groove 121 of the first fixing member 120 and the second groove 131 disposed on the second fixing member 130, the clamp is allowed to exit from the first groove 121 and the second groove 131 when the batteries are installed. Thus, it is possible to install a plurality of batteries 210 using the clamp, and prevent interference between the first fixing member 120 and the second fixing member 130 and the clamp, which reduces the difficulty of installing the batteries 210, and improves the convenience and efficiency of installing the batteries 210.

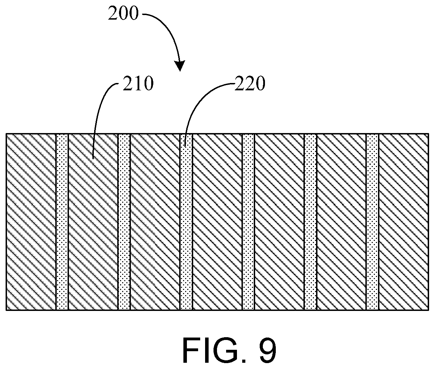

Further, as shown in FIG. 9, the battery apparatus 200 provided by the embodiment of the disclosure may further include a buffer layer 220, and the buffer layer 220 is provided between adjacent batteries 210 in the battery apparatus 200. The buffer layer 220 is a connecting glue layer, and the connecting glue layer is used to connect adjacent batteries 210 and provide a buffering force. The connecting glue layer may be coated on the larger surface of the battery 210.

Through the connecting glue layer provided between adjacent batteries 210 in the battery apparatus 200, the batteries 210 in the battery apparatus 200 can be connected to each other to prevent the relative positions of the batteries 210 in the battery apparatus 200 from slipping. In addition, by providing the connecting glue layer between adjacent batteries 210, the battery apparatus 200 can be compressed during the installation process for placing the battery apparatus 200 into the battery container 100, and when the clamp is relaxed, the connecting glue layer is released, which can generate a pressure on the first fixing member 120 and the second fixing member 130 to fix the position of the battery apparatus 200.

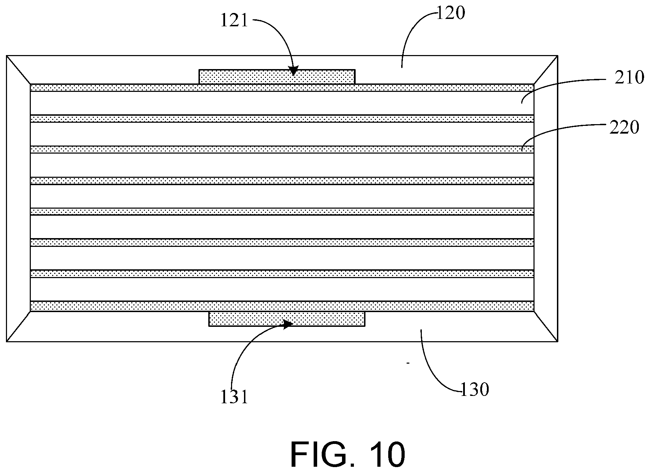

As shown in FIG. 10, a connecting glue layer is filled between the first fixing member 120 and the battery apparatus 200, and a connecting glue layer is filled between the second fixing member 130 and the battery apparatus 200, which can further improve the connection strength between the battery apparatus 200 and the battery container 100, and prevent movement of the battery apparatus 200 in the battery container 100.

In a feasible embodiment of the disclosure, the battery container 100 is formed by the frame and the bottom plate 110. The bottom plate 110 has the accommodating region 112, and the frame surrounds the accommodating region 112. The first frame of the frame forms the first end plate 122, and the third frame on the frame opposite to the first frame forms the second end plate 132. The batteries 210 are sequentially arranged from the first end plate 122 to the second end plate 132. The larger surface of the battery 210 adjacent to the first end plate 122 and the inner side surface of the first end plate 122 (the surface facing the battery 210) are connected by a connecting glue layer. The larger surface of the battery 210 adjacent to the second end plate 132 and the inner side surface of the second end plate 132 (the surface facing the battery 210) are connected by a connecting glue layer. The larger surfaces of adjacent batteries 210 are connected by a connecting glue layer. The first groove 121 on the first end plate 122 and the second groove 131 on the second end plate 132 are also filled with connecting glue after the battery apparatus 200 is assembled, which not only improves the connection strength but also increases the sealing performance.

In another feasible embodiment of the disclosure, the bottom plate 110, the frame, and the beams (such as crossbeam and longitudinal beam) form a plurality of accommodating parts 111, and each accommodating part 111 is provided with the battery apparatus 200 separately. For example, the frame may be connected to the bottom plate 110, the frame surrounds the accommodating region 112, the beams are provided in the frame, and the accommodating region 112 is divided into a plurality of sub-accommodating regions by one or more beams in the frame. The first end plate 122 is disposed on one side of one sub-accommodating region, and the second end plate 132 is disposed on one side of the sub-accommodating region opposite to the first end plate 122.

A first beam (crossbeam) and a second beam (longitudinal beam) can be arranged in the frame. The first beam and the second beam are arranged perpendicular to each other. The first beam and the second beam divide the accommodating region 112 into four sub-accommodating regions. For one sub-accommodating region, the first end plate 122 is a part (half) of one side of the frame, and the second end plate 132 is a part (half) of the beam opposite to the first fixing member 120.

For example, the first beam and one side (first frame) of the frame opposite to the first beam form the accommodating part 111. That is, the first end plate 122 is the first beam, and the second end plate 132 is the first frame of the frame. At this time, the first groove 121 may be disposed on the side surface of the first beam facing the first frame, and the second groove 131 may be disposed on the side surface of the first frame facing the first beam.

The frame includes the first frame, the second frame, the third frame, and the fourth frame that are connected head to end. When the accommodating region 112 is divided into a plurality of sub-accommodating regions by the first beam and the second beam, the first groove 121 and the second groove 131 may be respectively disposed on the end plates on two sides of each accommodating region 112. For example, the accommodating region 112 is provided with one first beam and one second beam. The first beam and the second beam are arranged perpendicular to each other to divide the accommodating region 112 into the first sub-accommodating region 1121, the second sub-accommodating region 1122, the third sub-accommodating region 1123, and the fourth sub-accommodating region 1124. In the accommodating part 111 corresponding to the first sub-accommodating region 1121, the first frame forms the first end plate 122, and the first beam forms the second end plate 132. In the accommodating part 111 corresponding to the second sub-accommodating region 1122, the first frame forms the first end plate 122, and the first beam forms the second end plate 132. In the accommodating part 111 corresponding to the third sub-accommodating region 1123, the third frame forms the first end plate 122, and the first beam forms the second end plate 132. In the accommodating part 111 corresponding to the fourth sub-accommodating region 1124, the third frame forms the first end plate 122, and the first beam forms the second end plate 132.

The battery apparatus 200 is installed in the accommodating part 111 corresponding to the first sub-accommodating region 1121, and a plurality of batteries are arranged sequentially from the first end plate 122 to the second end plate 132. The larger surface of the battery 210 adjacent to the first end plate 122 and the inner side surface of the first end plate 122 (the surface facing the battery 210) are connected by a connecting glue layer. The larger surface of the battery 210 adjacent to the second end plate 132 and the inner side surface of the second end plate 132 (the surface facing the battery 210) are connected by a connecting glue layer. The larger surfaces of adjacent batteries 210 are connected by a connecting glue layer. The first groove 121 on the first end plate 122 and the second groove 131 on the second end plate 132 are also filled with connecting glue after the battery apparatus 200 is assembled, which not only improves the connection strength but also increases the sealing performance. The battery apparatuses 200 in the accommodating parts 111 corresponding to the other sub-accommodating regions are arranged in the same manner as the first sub-accommodating region 1121, which will not be repeated here in the embodiment of the disclosure.

In the battery apparatus 200 provided by the embodiment of the disclosure, through the first groove 121 of the first fixing member 120 and the second groove 131 disposed on the second fixing member 130, the clamp is allowed to exit from the first groove 121 and the second groove 131 when the batteries are installed. Thus, it is possible to install a plurality of batteries using the clamp, and prevent interference between the first fixing member 120 and the second fixing member 130 and the clamp, which reduces the difficulty of battery installation, and improves the convenience and efficiency of battery installation.

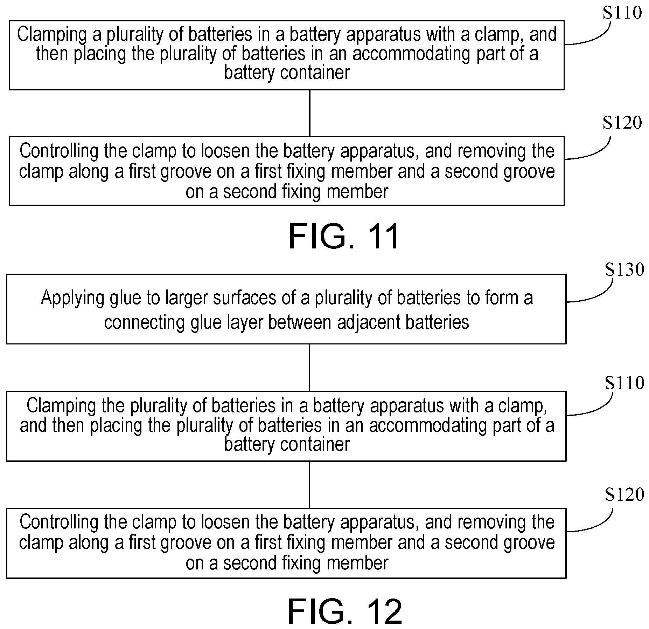

An exemplary embodiment of the disclosure also provides a battery assembling method. The battery assembling method is adapted for the above-mentioned battery pack. As shown in FIG. 11, the battery assembling method may include the following steps.

Step S 110, clamping the plurality of batteries in the battery apparatus with the clamp, and then placing the plurality of batteries in an accommodating part of a battery container.

Step S120, controlling the clamp to loosen the battery apparatus, and removing the clamp along a first groove on the first fixing member and the second groove on a second fixing member.

In the battery assembling method provided by the embodiment of the disclosure, the first groove 121 on the first fixing member 120 and the second groove 131 on the second fixing member 130 serve as a passage for the clamp to exit when the battery apparatus 200 is assembled. When the battery apparatus 200 is installed, after the clamp places the battery apparatus 200 into the battery container 100, the clamp releases the battery apparatus 200. At this time, the battery apparatus 200 presses the clamp and accommodates the clamp with the first groove 121 and the second groove 131 to prevent the clamp from being held by the battery apparatus 200 and the first fixing member 120 and the second fixing member 130. The interference between the first fixing member 120 and the second fixing member 130 and the clamp is prevented, which reduces the difficulty of battery installation, and improves the convenience and efficiency of battery installation.

Further, as shown in FIG. 12, before the step S110, the battery assembling method provided by the embodiment of the disclosure may further include the following step.

Step S130, applying glue to the larger surfaces of the plurality of batteries to form a connecting glue layer between adjacent batteries.

By applying glue to the larger surfaces of the batteries 210, the connecting glue layer is formed between the batteries 210, which can connect the batteries in the battery apparatus 200 to each other to prevent the relative positions of the batteries 210 in the battery apparatus 200 from slipping. In addition, by providing the connecting glue layer between adjacent batteries 210, the battery apparatus 200 can be compressed during the installation process for placing the battery apparatus 200 into the battery container 100, and when the clamp is relaxed, the connecting glue layer is released, which can generate a pressure on the first fixing member 120 and the second fixing member 130 to fix the position of the battery apparatus 200.

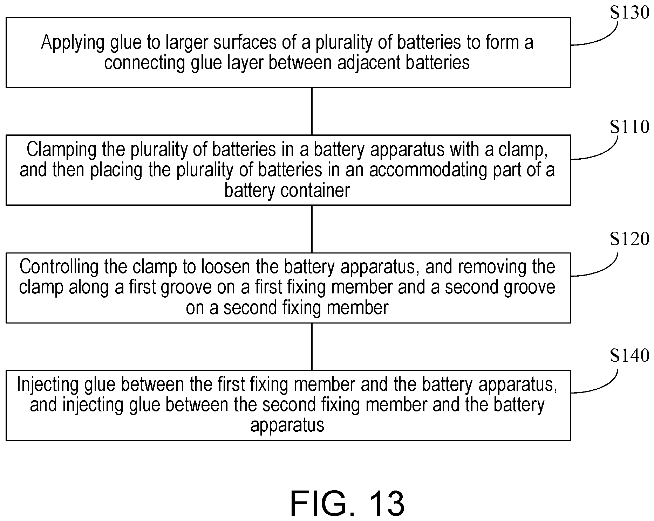

Further, as shown in FIG. 13, after the step S120, the battery assembling method provided by the embodiment of the disclosure may further include the following step.

Step S140, injecting glue between the first fixing member and the battery apparatus, and injecting glue between the second fixing member and the battery apparatus.

Glue is injected between the first fixing member 120 and the battery apparatus 200 to form a connecting glue layer, and glue is injected between the second fixing member 130 and the battery apparatus 200 to form a connecting glue layer. The connecting glue layer is filled between the first fixing member 120 and the battery apparatus 200, and the connecting glue layer is filled between the second fixing member 130 and the battery apparatus 200. Thus, the connection strength between the battery apparatus 200 and the battery container 100 can be further improved, and the movement of the battery apparatus 200 in the battery container 100 can be prevented.

The steps of the battery assembling method provided by the embodiment of the disclosure will be described in detail hereinafter.

In the step S130, glue can be applied to the larger surfaces of the batteries 210 to form the connecting glue layer between adjacent batteries 210.

Connecting glue can be applied to two large surfaces of the batteries 210 so that the large surfaces of adjacent batteries 210 are connected through the connecting glue layer. At this time, it should be noted that connecting glue is only applied to the inner side surfaces of the batteries 210 at two ends of the battery apparatus 200. Regarding the battery 210 close to the first end surface, the large surface of the battery 210 close to the first end surface is not coated with connecting glue, and regarding the battery 210 close to the second end surface, the large surface of the battery 210 close to the second end surface is not coated with connecting glue.

In the step S110, the batteries 210 in the battery apparatus 200 can be clamped by the clamp, and the batteries 210 can be placed in the accommodating part 111 of the battery container 100.

When the clamp clamps the battery apparatus 200, the clamp clamps the large surfaces of the batteries 210 and applies a pre-tightening force to the battery apparatus 200. The buffer layer 220 (connecting glue layer) between the batteries 210 is compressed, the total thickness of the battery apparatus 200 and the clamp is smaller than the distance between the first fixing member 120 and the second fixing member 130 so that the battery apparatus 200 and the clamp can enter the accommodating part 111 of the battery container 100. The clamp may be connected with a manipulator, and the manipulator is used to move an inspection group from a glue connection station to the battery container 100 station, and move the clamp and the battery apparatus 200 into the battery container 100 together. When the clamp places the battery apparatus 200 into the accommodating part 111, the claws of the clamp can be aligned with the first groove 121 and the second groove 131.

In the step S120, the clamp can be controlled to loosen the battery apparatus 200, and the clamp can exit along the first groove 121 on the first fixing member 120 and the second groove 131 on the second fixing member 130.

After the clamp releases the battery apparatus 200, the pre-tightening force exerted by the clamp on the battery apparatus 200 disappears, and the connecting glue layer between adjacent batteries 210 expands and drives the batteries 210 to move toward both sides. The batteries at two ends of the battery apparatus 200 are pressed against the first fixing member 120 and the second fixing member 130, and the clamp enters the first groove 121 and the second groove 131. Also, the clamp exits the battery container 100 along the first groove 121 and the second groove 131.

In the step S140, glue can be injected between the first fixing member 120 and the battery apparatus 200, and glue can be injected between the second fixing member 130 and the battery apparatus 200.

Glue is injected between the first fixing member 120 and the battery apparatus 200 to form a connecting glue layer between the first fixing member 120 and the battery apparatus 200. The connecting glue layer may cover the large surface of the battery 210 close to the first fixing member 120, and the connecting glue layer can fill the first groove 121. Glue is injected between the second fixing member 130 and the battery apparatus 200 to form a connecting glue layer between the second fixing member 130 and the battery apparatus 200. The connecting glue layer may cover the large surface of the battery 210 close to the second fixing member 130, and the connecting glue layer can fill the second groove 131.

In the battery assembling method provided by the embodiment of the disclosure, the first groove 121 on the first fixing member 120 and the second groove 131 on the second fixing member 130 serve as a passage for the clamp to exit when the battery apparatus 200 is assembled. When the battery apparatus 200 is installed, after the clamp places the battery apparatus 200 into the battery container 100, the clamp releases the battery apparatus 200. At this time, the battery apparatus 200 presses the clamp and accommodates the clamp with the first groove 121 and the second groove 131 to prevent the clamp from being held by the battery apparatus 200 and the first fixing member 120 and the second fixing member 130. The interference between the first fixing member 120 and the second fixing member 130 and the clamp is prevented, which reduces the difficulty of battery installation, and improves the convenience and efficiency of battery installation.

Further, by applying glue to the large surfaces of the batteries, the connecting glue layer is formed between the batteries, which can connect the batteries in the battery apparatus 200 to each other to prevent the relative positions of the batteries in the battery apparatus 200 from slipping. In addition, by providing the connecting glue layer between adjacent batteries, the battery apparatus 200 can be compressed during the installation process for placing the battery apparatus 200 into the battery container 100, and when the clamp is relaxed, the connecting glue layer is released, which can generate a pressure on the first fixing member 120 and the second fixing member 130 to fix the position of the battery apparatus 200.

Other embodiments of the disclosure will be apparent to those skilled in the art from consideration of the specification and practice of the disclosure disclosed herein. The disclosure is intended to cover any variations, uses or adaptations of the disclosure. These variations, uses, or adaptations follow the general principles of the disclosure and include common general knowledge or conventional technical means in the art that are not disclosed in the present disclosure. The specification and embodiments are illustrative.

## Claims

1. A battery container (100), comprising:
a bottom plate (110);
a first fixing member (120), disposed on the bottom plate (110); and
a second fixing member (130), disposed on the bottom plate (110),
wherein the second fixing member (130) and the first fixing member (120) are arranged opposite to each other, an accommodating part (111) for accommodating batteries (220) is formed between the first fixing member (120) and the second fixing member (130), a surface of the first fixing member (120) facing the second fixing member (130) has a first groove (121), the first groove (121) extends to an outer edge of the surface of the first fixing member (120) facing the second fixing member (130), a surface of the second fixing member (130) facing the first fixing member (120) has a second groove (131), and the second groove (131) extends to an outer edge of the surface of the second fixing member (130) facing the first fixing member (120).

2. The battery container (100) according to claim 1, wherein the surface of the first fixing member (120) facing the second fixing member (130) and the surface of the second fixing member (130) facing the first fixing member (120) are parallel to each other.

3. The battery container (100) according to claim 1 or 2, wherein an extending direction of the first groove (121) and an extending direction of the second groove (131) are parallel to each other.

4. The battery container (100) according to claim 3, wherein the extending direction of the first groove (121) is perpendicular to a top surface of the bottom plate (110), the extending direction of the second groove (131) is perpendicular to the top surface of the bottom plate (110), and a surface of the bottom plate (110) on which the batteries (220) are placed is the top surface of the bottom plate (110).

5. The battery container (100) according to claim 4, wherein the first groove (121) penetrates a top surface of the first fixing member (120), the second groove (131) penetrates a top surface of the second fixing member (130), a surface of the first fixing member (120) away from the bottom plate (110) is the top surface of the first fixing member (120), and a surface of the second fixing member (130) away from the bottom plate (110) is the top surface of the second fixing member (130).

6. The battery container (100) according to claim 3, wherein the extending direction of the first groove (121) is parallel to a top surface of the bottom plate (110), the extending direction of the second groove (131) is parallel to the top surface of the bottom plate (110), and a surface of the bottom plate (110) on which the batteries (220) are placed is the top surface of the bottom plate (110).

7. The battery container (100) according to claim 6, wherein the first groove (121) penetrates a first end surface of the first fixing member (120), the second groove (131) penetrates a first end surface of the second fixing member (130), and the first end surface of the first fixing member (120) and the first end surface of the second fixing member (130) are located on a same side.

8. A battery pack, comprising:
the battery container (100) according to any one of claims 1-7; and
a battery apparatus (200), including a plurality of batteries (210), wherein the battery apparatus (200) is disposed in the accommodating part (111) of the battery container (100).

9. The battery pack according to claim 8, wherein the battery apparatus (200) further includes:
a buffer layer (220), disposed between adjacent batteries (210) in the battery apparatus (200).

10. The battery pack according to claim 9, wherein the buffer layer (220) is a connecting glue layer, and the connecting glue layer is configured to connect the adjacent batteries (210) and provide buffering.

11. The battery pack according to any one of claims 8-10, wherein a connecting glue layer is filled between the first fixing member (120) and the battery apparatus (200), and a connecting glue layer is filled between the second fixing member (130) and the battery apparatus (200).

12. A battery assembling method, adapted for the battery pack according to any one of claims 8-11, the assembling method comprising:
clamping the plurality of batteries (210) in the battery apparatus (200) with a clamp, and then placing the plurality of batteries (210) in the accommodating part (111) of the battery container (100); and
controlling the clamp to loosen the battery apparatus (200), and removing the clamp along the first groove (121) and the second groove (131).

13. The battery assembling method according to claim 12, further comprising:
applying glue to larger surfaces of the plurality of batteries (210) to form a connecting glue layer between adjacent batteries (210).

14. The battery assembling method according to claim 13, further comprising:
injecting glue between the first fixing member (120) and the battery apparatus (200), and injecting glue between the second fixing member (130) and the battery apparatus (200).
